# EUROPÄISCHE PATENTANMELDUNG

(11) **EP 1 731 211 A1**
(43) Veröffentlichungstag der Anmeldung: **13.12.2006**
(21) Anmeldenummer: 06010590.5
(22) Anmeldetag: 23.05.2006
(51) Int. Cl.: B01D 46/42, B01D 46/52, F24F 3/16, F24F 13/078

(54) **Schwebstoffilter, insbesondere für den Einsatz in Reinräumen**

(30) Priorität: 10.06.2005 DE 202005009505 U
(71) Anmelder: M+W Zander Holding AG, 70499 Stuttgart (DE)
(72) Erfinder: Bräuer, Ralf, 70435 Stuttgart (DE); Dincsoy, Tahir, 73655 Plüderhausen (DE)
(74) Vertreter: Jackisch-Kohl, Anna-Katharina

(57) **Zusammenfassung**

Der Schwebstofffilter weist wenigstens ein Filtermedium (2, 3) und wenigstens ein Leuchtmittel (21) auf. Um den Schwebstofffilter so auszubilden, dass das Leuchtmittel (21) problemlos am Schwebstofffilter vorgesehen sein kann, liegt das Leuchtmittel (21) zumindest im Wesentlichen innerhalb der Höhe des Filtermediums (2, 3). Dadurch stört es die Strömungsverhältnisse der Reinluft beim Austritt aus dem Filtermedium (2, 3) nicht. Dennoch wird mit dem Leuchtmittel (21) eine ausreichende Ausleuchtung gewährleistet. Da das Leuchtmittel (21) außerdem im Bereich innerhalb des Filtermediums (2, 3) liegt, ist eine gesonderte Montage des Leuchtmittels (21) nicht erforderlich.

## Beschreibung

Die Erfindung betrifft einen Schwebstofffilter, insbesondere für den Einsatz in Reinräumen, nach dem Oberbegriff des Anspruches 1.

In Reinräumen sind beispielsweise im Deckenbereich Schwebstofffilter vorgesehen, durch die die Reinluft vor dem Eintritt in den Reinraum strömt. Zur Beleuchtung des Reinraumes sind im Deckenbereich Leuchtmittel vorgesehen, die am Rahmen der Schwebstofffilter befestigt und im Bereich unterhalb der Schwebstofffilter angeordnet sind. Die Leuchtmittel stören die Strömungsverhältnisse, da sie im Strömungsbereich der aus den Schwebstofffiltern nach unten austretenden Reinluft liegen. Außerdem schränkt diese Anordnung die lichte Höhe des Reinraumes ein.

Der Erfindung liegt die Aufgabe zugrunde, den gattungsgemäßen Schwebstofffilter so auszubilden, dass das Leuchtmittel problemlos am Schwebstofffilter vorgesehen sein kann.

Diese Aufgabe wird beim gattungsgemäßen Schwebstofffilter erfindungsgemäß mit den kennzeichnenden Merkmalen des Anspruches 1 gelöst.

Beim erfindungsgemäßen Schwebstofffilter liegt das Leuchtmittel zumindest im Wesentlichen innerhalb der Höhe des Filtermediums. Dadurch stört es die Strömungsverhältnisse der Reinluft beim Austritt aus dem Filtermedium nicht. Dennoch wird mit dem Leuchtmittel eine ausreichende Ausleuchtung gewährleistet. Da das Leuchtmittel außerdem im Bereich innerhalb des Filtermediums liegt, ist eine gesonderte Montage des Leuchtmittels nicht erforderlich. Vielmehr wird das Leuchtmittel in einem Zuge zusammen mit dem Schwebstofffilter montiert.

Bei einer anderen Ausführung ist das Leuchtmittel zumindest im Wesentlichen innerhalb der Höhe des Rahmens untergebracht. Auch dadurch wird gewährleistet, dass das Leuchtmittel die Strömungsverhältnisse nicht beeinträchtigt und dennoch für eine ausreichende Ausleuchtung sorgt.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsbeispiele näher erläutert. Es zeigen:
- Fig. 1: in Vorderansicht einen erfindungsgemäßen Schwebstofffilter,
- Fig. 2: eine Seitenansicht des Schwebstofffilters gemäß Fig. 1,
- Fig. 3: eine Draufsicht auf den Schwebstofffilter gemäß Fig. 1,
- Fig. 4: einen Schnitt längs der Linie A-A in Fig. 3,
- Fig. 5: in vergrößerter Darstellung die Einzelheit B in Fig. 4,
- Fig. 6: in einer Darstellung entsprechend Fig. 5 eine zweite Ausführungsform eines erfindungsgemäßen Schwebstofffilters,
- Fig. 7: in einer Darstellung entsprechend Fig. 5 eine dritte Ausführungsform eines erfindungsgemäßen Schwebstofffilters.

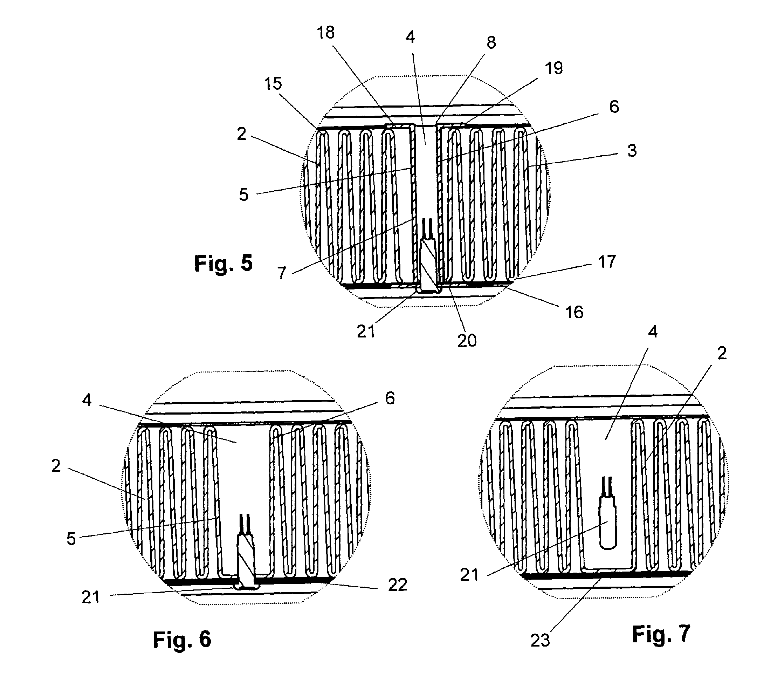

Der Schwebstofffilter wird vorteilhaft in Reinräumen eingesetzt und hat einen Rahmen 1, der im Ausführungsbeispiel quadratischen Umriss hat. Er kann auch einen rechteckigen oder jeden anderen geeigneten eckigen oder gar runden Umriss haben. Der Rahmen 1 besteht vorteilhaft aus metallischem Werkstoff, insbesondere aus Aluminium. Der Rahmen 1 umgibt zwei Filtermedien 2, die etwa in halber Breite des Rahmens 1 durch einen Zwischenraum 4 voneinander getrennt sind. Er wird durch zwei parallel zueinander liegende Seitenwände 5, 6 begrenzt, die jeweils Bestandteil einer Profilschiene 7, 8 sind (Fig. 5). Die Seitenwände 5, 6 erstrecken sich zwischen einander gegenüberliegenden Rahmenseiten 9, 10 und schließen senkrecht an sie an. Die Seitenwände 5, 6 liegen in halber Breite des Rahmens 1 und parallel zu den Rahmenseiten 11, 12. Die Rahmenseiten 9, 10, 11 sowie die Seitenwand 5 begrenzen einen ersten Aufnahmeraum 13 und die Rahmenseiten 9, 10, 12 und die Seitenwand 6 einen zweiten Aufnahmeraum 14 für die Filtermedien 2, 3. Beide Aufnahmeräume 13, 14 sind vorteilhaft gleich groß. Je nach Ausbildung des Schwebstofffilters können die Aufnahmeräume 13, 14 auch unterschiedliche Größe haben. Weiter ist es möglich, mehr als zwei Aufnahmeräume 13, 14 im Schwebstofffilter vorzusehen, so dass dementsprechend zwei oder mehr Zwischenräume 14 vorgesehen sind.

Die Filtermedien 2, 3 sind in herkömmlicher Weise ausgebildet und mit einer Faltstruktur versehen. Die Filtermedien 2, 3 erstrecken sich zwischen den einander gegenüberliegenden Rahmenseiten 9, 10 sowie zwischen den Rahmenseiten 11, 12 und der jeweils gegenüberliegenden Seitenwand 5, 6 des Zwischenraumes 4. Die Filtermedien 2, 3 liegen zwischen einem oberen und einem unteren Griffschutz 15, 16. Ein solcher Griffschutz ist bei Schwebstofffiltern bekannt und wird darum auch nicht näher erläutert. Der untere Griffschutz 16 kann mit einem Laminator 17 versehen sein.

Die Profilschienen 7, 8 haben, wie sich aus Fig. 5 ergibt, L-förmigen Querschnitt. Die Seitenwände 5, 6 bilden den vertikalen Schenkel der Profilschienen 7, 8, die am oberen Ende jeweils in einen kurzen Schenkel 18, 19 übergehen. Mit ihnen übergreifen die Profilschienen 7, 8 die benachbarten Endbereiche der Filtermedien 2, 3, so dass diese einwandfrei lagegesichert sind. Die Schenkel 18, 19 erstrecken sich von den vertikalen Seitenwänden 5, 6 aus entgegengesetzt zueinander. Am unteren Ende stehen die beiden vertikalen Seitenwände 5, 6 der Profilschienen 7, 8 senkrecht von einer Leiste 20 ab, die sich über die Seitenwände 5, 6 der Profilschienen 7, 8 gleich weit erstreckt wie die oberen kurzen Schenkel 18, 19. Die Leiste 20 liegt in Höhe des unteren Griffschutzes 16 und ist vorteilhaft gleich dick wie dieser.

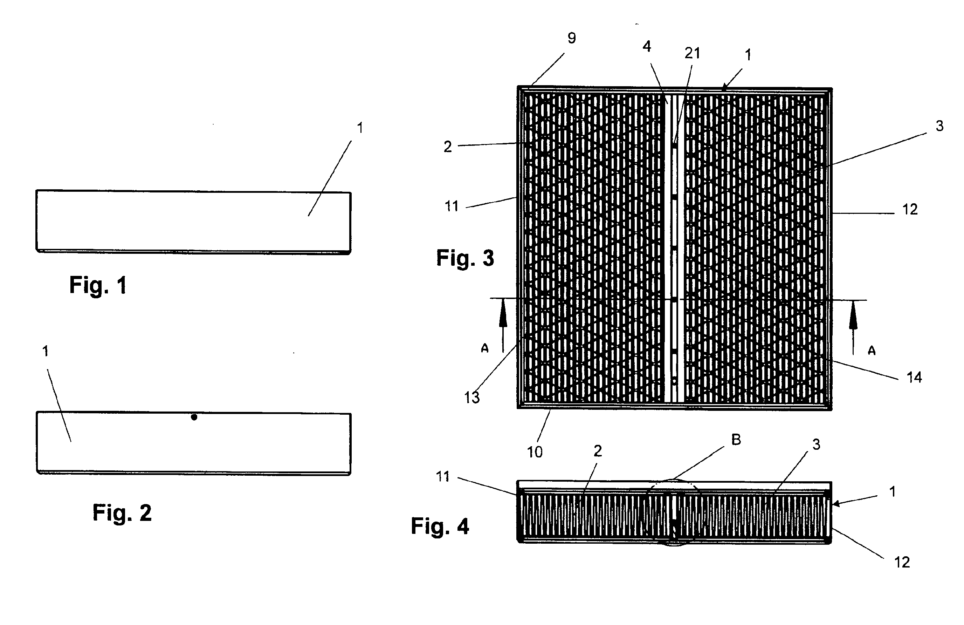

Im Zwischenraum 4 ist wenigstens ein Leuchtmittel 21 untergebracht. Wie Fig. 3 zeigt, sind im Ausführungsbeispiel im Zwischenraum 4 mit Abstand hintereinander fünf Leuchtmittel 21 angeordnet, die vorteilhaft durch LEDs gebildet sind. Anstelle der LEDs können auch herkömmliche Glühlampen oder andere Leuchtmittel eingesetzt werden. Damit das von den Leuchtmitteln 21 abgestrahlte Licht nach unten gelangen kann, kann die Leiste 20 im Strahlbereich der Leuchtmittel 21 lichtdurchlässig ausgebildet sein. Es ist aber auch möglich, in der Leiste 20 Öffnungen vorzusehen, in die die Leuchtmittel 21 so eingesetzt sind, dass sie das Licht nach unten in den Raum strahlen können. Die Leiste 20 und der untere Griffschutz 16 sind gegenüber dem unteren Rand des Rahmens 1 zurückgesetzt (Fig. 5).

Die Einbauöffnungen für die Leuchtmittel 21 empfehlen sich dann, wenn die Leuchtmittel durch LEDs gebildet sind, die nur kleine Querschnitte haben. Bei größeren Lichtquellen, beispielsweise bei Leuchtstoffröhren, ist es vorteilhafter, sie hinter der Leiste 20 verdeckt anzuordnen und die Leiste im Strahldurchtrittsbereich lichtdurchlässig auszubilden.

Da das Leuchtmittel 21 zwischen den Seitenwänden 5, 6 liegt, liegen die Filtermedien 2, 3 geschützt hinter diesen Seitenwänden. Die Seitenwände 5, 6 können so ausgebildet sein, dass sie die von den Leuchtmitteln 21 ausgehende Wärme von den Filtermedien 2, 3 abhalten.

Fig. 6 zeigt eine zweite Ausführungsform des Schwebstofffilters. Der Zwischenraum 4 wird durch einen nicht gefalteten Bereich des Filtermediums 2 gebildet. Während im Bereich außerhalb des Zwischenraumes 4 das Filtermedium V-förmig gefaltet ist, verläuft das Filtermedium im nicht gefalteten Bereich bei dieser Ausführungsform U-förmig. Auf diese Weise werden ebenfalls die beiden Seitenwände 5, 6 gebildet, die jedoch durch Teile des Filtermediums 2 gebildet werden. Es ist auch möglich, zwei Filtermedien 2, 3 zu verwenden, die mit ihren benachbarten Enden so miteinander verbunden werden, dass die Seitenwände 5, 6 gebildet werden. Es ist in diesem Falle beispielhaft möglich, den Boden 22 des Zwischenraumes 4 dadurch zu bilden, dass die abgewinkelten Ränder der beiden Filtermedien 2, 3 beispielsweise aufeinandergelegt und miteinander verbunden werden. Dies hat den Vorteil, dass der Boden 22 eine hohe Festigkeit hat, so dass auf ihm das Leuchtmittel 21 befestigt werden kann, beispielsweise durch ein Klebemittel. Da das Filtermedium an sich lichtdurchlässig ist, müssen gesonderte Lichtdurchtrittsöffnungen im Boden 22 des Zwischenraumes 4 nicht vorgesehen sein. Vorteilhaft wird als Leuchtmittel 21 wiederum eine LED verwendet, die sich durch eine lange Lebensdauer sowie eine nur geringe Wärmeentwicklung auszeichnet. Im Zwischenraum 4 kann entsprechend der Anforderung eine erforderliche Zahl von Leuchtmitteln 21 untergebracht sein. Da bei dieser Ausführungsform zusätzliche Profilschienen zur Begrenzung des Zwischenraumes 4 gegenüber den Filtermedien 2, 3 nicht erforderlich sind, kann dieser Schwebstofffilter kostengünstig hergestellt werden.

Bei der Ausführungsform gemäß Fig. 7 wird ähnlich wie bei der Ausführungsform gemäß Fig. 6 ein Zwischenraum 4 durch einen ungefalteten Bereich des Filtermediums 2 gebildet. Im Zwischenraum 4 befindet sich das Leuchtmittel 21, das im dargestellten Ausführungsbeispiel eine LED ist. Das Leuchtmittel 21 kann auch beispielhaft durch eine Leuchtstoffröhre oder eine andere Lichtquelle gebildet sein. Der Zwischenraum 4 ist nach unten durch das Filtermedium selbst begrenzt. Dieser Teil des Filtermediums 2 bildet eine Abdeckung 23 des Zwischenraumes 4. Das Leuchtmittel 21 hat eine solche Lichtstärke, dass das Licht durch das Filtermedium nach unten in den Reinraum gelangt. Das Filtermedium 2 wird im gesamten Bereich des Zwischenraumes, insbesondere auch im Bereich unterhalb des Leuchtmittels 21 durchströmt. Eine partikeldicht ausgeführte Durchführung des Lichtaustritts des Leuchtmittels auf die Reinraumseite wie bei den Ausführungsformen gemäß Fig. 5 und 6 ist nicht notwendig.

Grundsätzlich ist es auch möglich, zwei Filtermedien vorzusehen, die mit Abstand nebeneinander liegen und die den Zwischenraum 4 seitlich begrenzen. In diesem Falle befindet sich im Unterschied zur dargestellten Ausführungsform gemäß Fig. 7 unterhalb des Leuchtmittels 21 nur die Abdeckung 23, nicht jedoch der Boden 22, der durch den ungefalteten Teil des Filtermediums 2 gebildet wird.

Bei den beschriebenen Ausführungsbeispielen liegen die Leuchtmittel geschützt im Zwischenraum 4. Insbesondere aber stehen die Leuchtmittel 21 nicht nach unten über das Filtermedium 2, 3 bzw. den Schwebstofffilter vor, so dass die Strömungsverhältnisse unterhalb des Schwebstofffilters durch die Leuchtmittel nicht gestört werden. Auf diese Weise ist es möglich, den Bereich unterhalb des Schwebstofffilters optimal auszuleuchten und dennoch optimale Strömungsverhältnisse zu gewährleisten.

Außerdem sind die Leuchtmittel 21 im Bereich außerhalb des Ausströmquerschnittes des Filtermediums 2, 3 angeordnet, so dass die Strömungsverhältnisse der Reinluft sowie die lichte Höhe des Reinraumes nicht beeinträchtigt werden.

## Patentansprüche

1. Schwebstofffilter, insbesondere für den Einsatz in Reinräumen, mit wenigstens einem Filtermedium und wenigstens einem Leuchtmittel,
**dadurch gekennzeichnet, dass** das Leuchtmittel (21) zumindest im Wesentlichen innerhalb der Höhe des Filtermediums (2, 3) liegt.

2. Schwebstofffilter, insbesondere nach Anspruch 1,
**dadurch gekennzeichnet, dass** das Leuchtmittel (21) zumindest im Wesentlichen innerhalb der Höhe eines das Filtermedium (2, 3) aufnehmenden Rahmens (1) liegt.

3. Schwebstofffilter nach Anspruch 1 oder 2,
**dadurch gekennzeichnet, dass** das Leuchtmittel (21) in einem Einbauraum (4) untergebracht ist.

4. Schwebstofffilter nach Anspruch 3,
**dadurch gekennzeichnet, dass** der Einbauraum (4) im Bereich zwischen zwei Filtermedien (2, 3) liegt.

5. Schwebstofffilter nach Anspruch 4,
**dadurch gekennzeichnet, dass** der Einbauraum (4) von zwei Seitenwänden (5, 6) begrenzt ist, die den Einbauraum (4) von Aufnahmeräumen (13, 14) für das Filtermedium (2, 3) trennen.

6. Schwebstofffilter nach Anspruch 5,
**dadurch gekennzeichnet, dass** die Seitenwände (5, 6) durch Profilschienen (7, 8) gebildet sind, die sich zwischen Rahmenteilen (9, 10) erstrecken.

7. Schwebstofffilter nach Anspruch 3,
**dadurch gekennzeichnet, dass** der Einbauraum (4) durch einen Bereich innerhalb des Filtermediums (2, 3) gebildet ist.

8. Schwebstofffilter nach Anspruch 7,
**dadurch gekennzeichnet, dass** das Filtermedium (2, 3) zur Bildung des Einbauraumes (4) einen ungefalteten Bereich aufweist.

9. Schwebstofffilter nach einem der Ansprüche 1 bis 8,
**dadurch gekennzeichnet, dass** der Einbauraum (4) nach unten durch eine Abdeckung (20, 23) wenigstens teilweise abgedeckt ist.

10. Schwebstofffilter nach Anspruch 9,
**dadurch gekennzeichnet, dass** die Abdeckung (20, 23) wenigstens einen lichtdurchlässigen Bereich aufweist.

11. Schwebstofffilter nach Anspruch 9 oder 10,
**dadurch gekennzeichnet, dass** die Abdeckung (20) wenigstens eine Öffnung aufweist, in die das Leuchtmittel (21) eingesetzt ist.

12. Schwebstofffilter, insbesondere nach einem der Ansprüche 1 bis 11,
**dadurch gekennzeichnet, dass** das Leuchtmittel (21) im Bereich außerhalb des Ausströmquerschnittes des Filtermediums (2, 3) liegt.

13. Schwebstofffilter nach einem der Ansprüche 1 bis 12,
**dadurch gekennzeichnet, dass** das Leuchtmittel (21) mit Abstand oberhalb des unteren Randes des Rahmens (1) angeordnet ist.

14. Schwebstofffilter nach einem der Ansprüche 1 bis 13,
**dadurch gekennzeichnet, dass** das Leuchtmittel (21) eine LED oder eine Leuchtstoffröhre ist.
